Europäisches Patentamt

**European Patent Office**

Office européen des brevets

(19)

(11) Publication number: **0 013 129**

**A1**

(12)

# EUROPEAN PATENT APPLICATION

(21) Application number: **79302965.3**

(22) Date of filing: **19.12.79**

(51) Int. Cl.³: **F 16 F 15/30**
**F 16 F 15/16**

(30) Priority: **26.12.78 US 973472**

(43) Date of publication of application:
**09.07.80 Bulletin 80/14**

(84) Designated Contracting States:
**DE FR GB IT SE**

(71) Applicant: **Cummins Engine Company, Inc.**
**1000 Fifth Street**
**Columbus, INdiana 47201(US)**

(72) Inventor: **Tresselt, Arnold Richard**
**R.R. 6**
**Columbus, Indiana(US)**

(74) Representative: **Newens, Leonard Eric et al,**
**F.J. CLEVELAND CO. 40/43 Chancery Lane**
**London WC2A 1JQ(GB)**

(54) **Viscous vibration damper.**

(57) The disclosure illustrates a viscous vibration damper (10) capable of manufacture using low cost fabrication techniques. Formed and welded steel plates (16,18) form an annular working chamber (36) containing a viscous fluid and an annular inertia ring (38) consisting of series of stacked welded discs (40,42,44). One of the discs (40) has a pair of spaced holes (46, 48) at fixed locations relative to its central axis (A). The remaining discs (44) have dimples (66, 68) at the same location relative to their central axis. The dimples (66, 68) permit the discs to be nestled in concentric alignment. The outermost discs (42, 44) have holes (76) which provide recesses for nylon bearing pads (78) for the inertia ring (38).

FIG-3

EP 0 013 129 A1

Croydon Printing Company Ltd.

The present invention relates to rotary vibration 0013129
dampers and more specifically to the type of damper known as
a viscous vibration damper.

Vibration dampers of the type shown in U.S. Patent
No. 2,824,467 damp torsional vibrations in a rotary output
shaft such as the crankshaft of an internal combustion
engine. An annular housing is secured to the crankshaft,
and has a chamber filled with highly viscous fluid and a
heavy ring known as an inertia ring. When the engine is
operating and producing torsional vibrations in the crankshaft, the inertia ring tends to oscilate relative to the
housing. The relative movement causes a working of the
viscous fluid thereby dissipating the vibrational energy in
the form of heat.

Such a damper has proven effective in damping
torsional vibrations for high horsepower engines. However,
it is expensive since the inertia ring must be made from a
casting or forging and the housing from another casting.
Castings and forgings have continued to escalate in cost.
Since they constitute a major part of the damper, they
prevent the manufacture of a low cost damper. In the past,
some attempts have been made to fabricate various elements
of dampers torsional vibration in other than cast form.
Examples are U.S. Patents No. 2,092,591 and 1,718,208 which
show the inertia ring made from a pair of discs. However,
this is not a truly effective construction since it fails to
insure adequate axial concentricity between the discs.

The above problems are solved by a vibration
damper of the above type where the inertia ring comprises a plurality of stacked discs with means for securing the elements in concentric alignment. In a preferred embodiment the discs have means for forming a protrusion from one face at least at two fixed locations relative to the central axis thereof and to each other. An indentation on the opposite face at the same fixed locations enables the discs to be nestled in concentric alignment.

The above and other related features of the present invention will be apparent from a reading of the following description of the disclosure shown in the accompanying drawings and the novelty thereof pointed out in the appended claims.

In the drawings:

Figure 1 is an end view of a viscous vibration damper embodying the present invention.

Figure 2 is a sectional view of the vibration damper of Figure 1 along with a portion of an internal combustion engine crankshaft to which it may be secured.

Figure 3 is a highly enlarged fragmentary view of the damper of Figure 2.

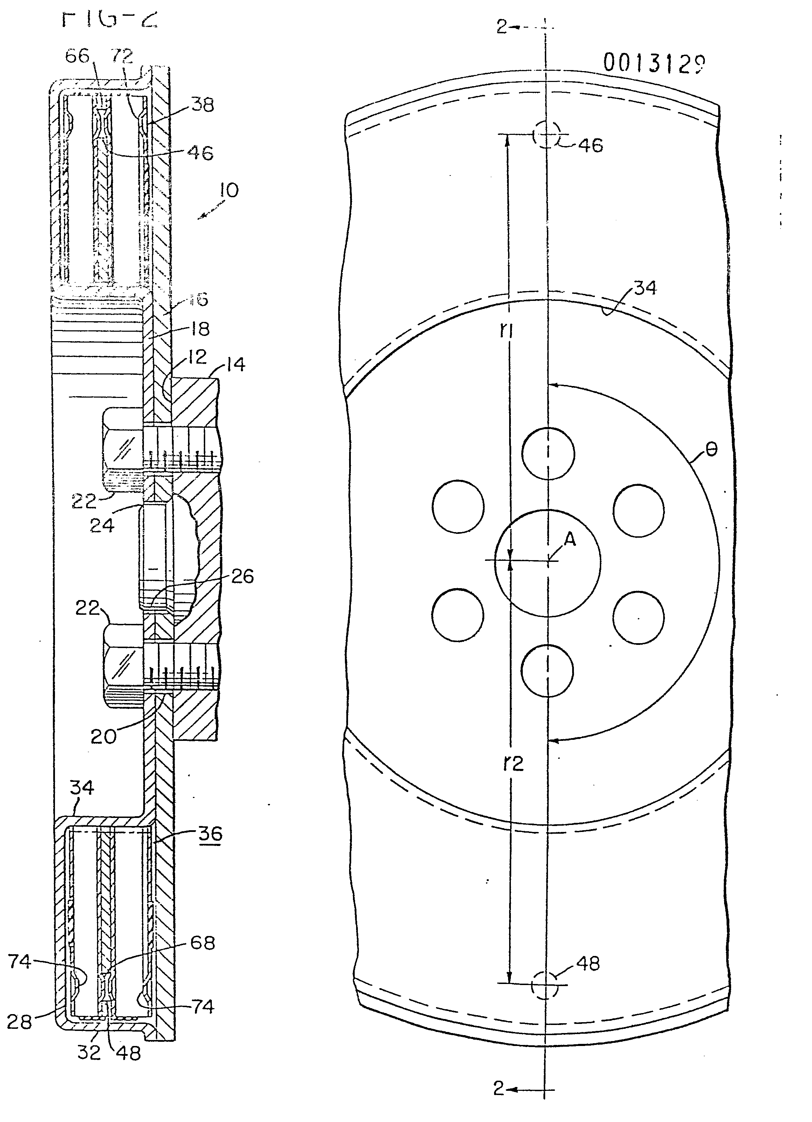

Referring to Figures 1 and 2, the viscous vibration damper 10 is adapted to be secured to the nose 12 of a crankshaft 14 such as one for an internal combustion engine. To this end the damper 10 comprises first and second discs 16 and 18 each having holes 20 which receive screws 22 to secure the damper 10 to the crankshaft 14. A circular protrusion 24 pilots the damper 10 by means of a central opening 26. Disc 18 has an annular trough 28 formed adjacent its perifery 30. Trough 28 has a generally rectangular

0013129

cross section and has an outer border or wall 32 adjacent perifery 30 and an inner wall or border 34 intermediate perifery 30. Disc 16 and formed disc 18 form in cooperation an annular working chamber 36 which contains an inertia ring generally indicated at 38 and highly viscous fluid (not shown) to produce the damping action described above.

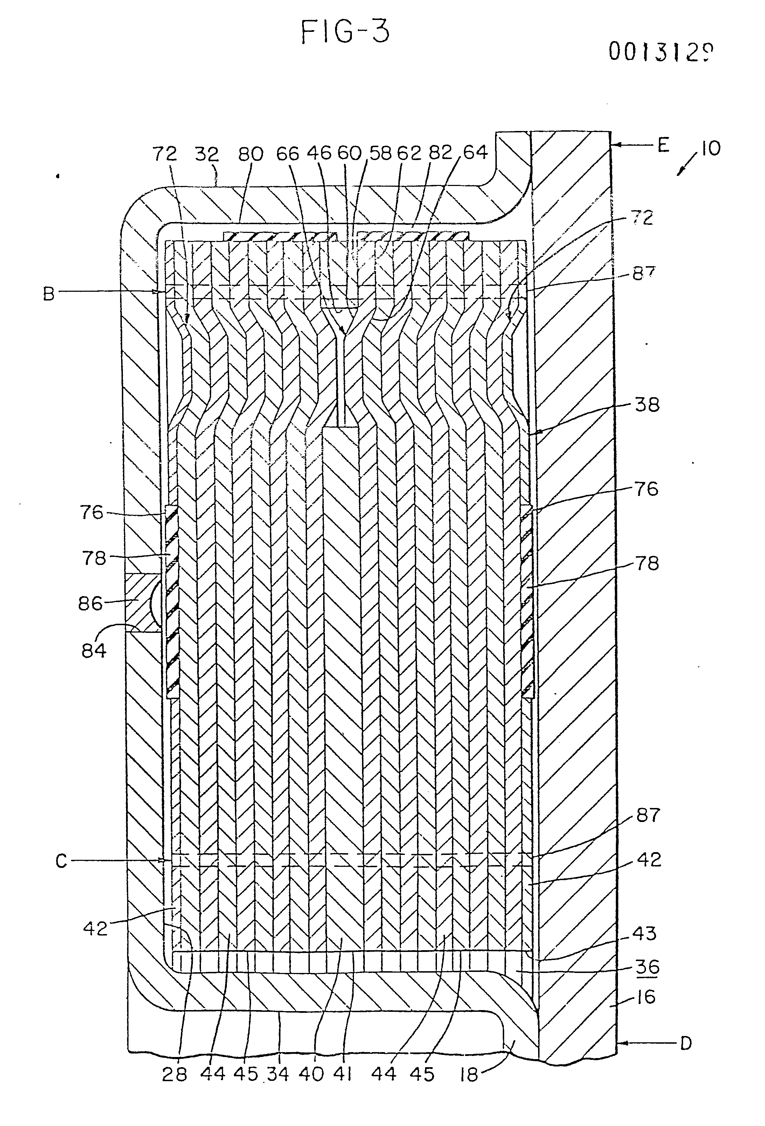

Referring to Figure 3, inertia ring 38 comprises a plurality of stacked discs including a central disc 40, end discs 42 and intermediate discs 44, having central holes 41, 43, and 45 respectively. Disc 40, which we will call a reference disc, has a pair of holes 46, 48, of given diameter, each positioned in a fixed location with respect to one another and to the central axis A of the damper 10. As shown particularly in Figure 1, hole 46 has a distance $r_1$ from central axis A and hole 48 has a distance $r_2$ from axis A. The angular position with respect to one another is represented by angle $\theta$. As illustrated $r_1$ is equal to $r_2$ and the angle $\theta$ is $180°$. It should be apparent, however, that $r_1$ need not be equal to $r_2$ and that $\theta$ can be an angle other than $180°$.

Face 58 of each disc 44 has a protrusion 60 extending from it and the opposite face 62 has an indentation 64 conforming to and in the same position as protrusion 60. When the protrusion and indentation are formed integral with the material of disc 44 a dimple 66 is thus formed. The dimple 66 is sized and positioned at radius $r_1$, with respect to the axis of disc 4 so that it will be received in hole 46. A corresponding dimple 68 has the size and position at radius $r_2$ with respect to the axis of disc 44 and angle $\theta$ with respect to dimple 66 to be received in hole 48. Each disc 44 has dimples 66 and 68 in the same location so that when the dimples 66 are nestled the discs 44 are in concentric alignment with the reference disc 40. The end discs 42 have dimples 72 and 74 in the same $r_1$, $r_2$ and $\theta$ positions so that they are also nestled in concentric alignment. In addition, end discs 42 have holes 76 which in cooperation with adjacent disc 44 form a recess which receives a nylon pad 78. The thickness of discs 42 are made less than the thickness of pad 78 so that it protrudes and acts as a bearing to prevent metal to metal contact between the inertia ring 38 and the walls of working chamber 36. The discs 40, 44 and 42 are secured, for example, by resistance or electron beam welding, 87, at radius B and C.

The manufacture of the above damper takes place as follows. The discs 40, 44 and 42 are formed by a suitable means such as a punch press to obtain the outer and inner diameters. Then the dimples 66, 72 are formed as well as hole 76 punched out. When this is completed the discs are stacked so that the dimple sets 66, 72 and 68, 74 nestle in one another, and that the dimples 66, 68 on either side of the reference disc 40 project into the holes 46 and 48 respectively. Since there is a set of discs on either side of the reference disc 40, it is desirable to make $\theta$ equal to 180°. In that way a single die can be used to produce the discs to the right and to the left of reference disc 40. The dimples and the holes maintain the discs in concentric alignment so that they may be clamped and then welded together. If necessary the outer faces of one of the discs 42 may be machined to achieve a given clearance between the end faces of internal ring 38 and the corresponding walls of working chamber 36.

When this is completed, the nylon pads 78 are inserted in holes 76 and the perifery of the inertia ring 38 wrapped with teflon tape at 80 and 82.  The inertia ring is placed in trough 28 and discs 18 and 16 placed against one another.  The discs 16 and 18 are secured together continuously at a radius D adjacent the inner border of the working chamber 36 and a radius E adjacent the outer border for example by electron beam or arc welding.  Thus, the working chamber 36 at  radiuses E and D is completely sealed.  Two holes 84 in disc 18 with removable plugs 86 permits viscous fluid to be forced into working chamber 36. Such fluid may be silicone of an appropriately high viscosity.

Thus, it is seen by the description above that the damper produced has a total lack of cast or forged parts. The stamping and forming needed for this damper are well within the capability of many small fabrication shops.  The resultant material cost reduction and simplicity of fabrication enables a substantial reduction in manufactured cost while maintaining an equivalent level of performance.

C L A I M S

1. A viscous vibration damper comprising, housing means (16,18) for forming an annular working chamber (36), an annular inertia element (38) rotatably contained within said working chamber (36), said element (38) comprising a plurality of stacked disc elements (40,42,44) and means for securing said elements (40,42,44) together in concentric alignment and a viscous fluid contained within said chamber (36) whereby torsional oscilations of said housing means are damped by the working of said viscous fluid within said chamber (36).

2. Apparatus as in claim 1 wherein said discs (44) include means for forming a protrusion (60) extending from one face thereof at at least two locations, and an indentation (64) on the opposite face thereof at said two locations, said indentations (64) being placed at substantially identical locations relative to the central axis and to each other for all of said discs whereby said protrusions (60) are received in indentations (64) of adjacent discs and said discs are nestled in concentric alignment.

3. Apparatus as in claim 2 wherein one of said discs (40) has indentations on both faces thereof at said locations to form a reference disc, the protrusions (60) on the remaining discs (42, 44) facing said reference disc (40) whereby the end discs of said stack do not have protrusions extending from said stack.

4. Apparatus as in claim 2 wherein said protrusion and indentation means comprises dimples (66, 68) formed in said discs.

5. Apparatus as in claim 4 wherein each disc has a pair of dimples (66, 68) spaced approximately 180° apart.

6. Apparatus as in claim 4 wherein one of said discs (40) has holes (46, 48) therethrough at said locations to form a reference disc, all of the dimples (66, 68) facing toward said opening so that the end discs (42, 44) do not have protrusions extending from said stack.

7. Apparatus as in claim 6 further comprising nylon pads (78) for acting as a bearing between the end faces of said stack of discs and the walls of said working chamber (36) and wherein the discs (42,44)

- 3 -

at opposite ends of the stack have holes (76) therethrough whereby in the stack said holes (76) and the face of the adjacent disc form a recess for receiving said nylon pads (78).

8. Apparatus as in claim 1 further comprising nylon pads (78) for acting as a bearing between the end faces of said stack of discs and the walls of said working chamber (36) and wherein the discs at opposite ends of the stack have holes (76) therethrough whereby in the stack said holes (76) and the face of the adjacent disc form a recess for receiving said nylon pads.

9. Apparatus as in claim 1 wherein said securing means is an electron beam or resistance weld.

10. Apparatus as in claim 1 wherein said housing means comprises: a first annular element (18) formed with an annular trough (28) having a rectangular cross section adjacent its periphery and a flat circular plate element (16) abutting said first element (18) to form therewith said working chamber (36), and means for continuously securing said first and second elements adjacent the inner and outer boundary of said trough (28) to seal · said working chamber.

11. Apparatus as in claim 6 wherein striking means comprises an electron beam or resistance weld.

12. Apparatus as in claim 6 wherein one of said elements is formed from high strength steel for resisting axially directed vibrations of a rotary member to which the vibration damper is attached.

13. Apparatus as in claim 8 wherein said second element is formed from high strength steel.

FIG-2

0013129

FIG-3

0013129

| Category | DOCUMENTS CONSIDERED TO BE RELEVANT<br>Citation of document with indication, where appropriate of relevant passages | Relevant to claim | CLASSIFICATION OF THE APPLICATION (int Cl |
|---|---|---|---|
| D | US - A - 2 824 467 (O'CONNOR) | | F 16 F 15/30<br>15/16 |
| D | US - A - 2 092 591 (SOHLSTROM) | | |
| D | US - A - 1 718 208 (ANIBAL) | | |
| | -- | | |
| X | GB - A - 1 239 450 (HOLSET)<br>* Page 1, lines 75-83; page 2, line 38 to page 3, line 88; page 4, line 116 to page 5, line 92 * | 1,9,10,<br>11 | |
| | -- | | |
| | GB - A - 1 092 428 (O'CONNOR)<br>* Page 3, line 49 to page 8, line 74; figures 1-9 * | 1,7,8,<br>10 | F 16 F<br>B 24 D |
| | -- | | |
| X | US - A - 1 532 962 (TURNER)<br>* Entire document * | 1,2,4,<br>5 | |
| | -- | | |
| | DE - A - 2 606 577 (BARMAG BARMER)<br>* Page 1, claim 1; figures 1a-3 * | 1-3 | |
| | -- | | |
| | GB - A - 366 818 (BRITISH THOMSON HOUSTON CIE)<br>* Entire document * | 1,2 | |
| | -- | | |
| | US - A - 3 716 901 (BRAGG)<br>* Column 1, line 51 to column 4, line 16; figures 1-6 * | 1,7,8,<br>10,12,<br>13 | |
| | -- ./. | | |

TECHNICAL FIELDS SEARCHED (Int.Cl

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

& member of the same patent family,
corresponding document

The present search report has been drawn up for all claims

| Place of search | Date of completion of the search | Examiner |
|---|---|---|
| The Hague | 27-03-1980 | ESPEEL |

EPO Form 1503.1 06.78

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | |
| PE | DE - A - 2 818 296 (FEDERN) <br> * Entire document * | 1, 10 | |
| | -- | | |
| A | GB - A - 636 881 (HONDAILLE) | 1 | |
| A | GB - A - 520 513 (ENGLISH ELECTRIC) | 1 | |
| A | US - A - 3 823 619 (SHOTWELL) | 1 | |
| A | DE - A - 2 326 118 (SUDDEUTSCHE BREMSEN) | | **TECHNICAL FIELDS SEARCHED (Int. Cl. 3)** |
| | ---- | | |